# EUROPÄISCHE PATENTSCHRIFT

(11) **EP 2 557 334 B1**
(45) Veröffentlichungstag und Bekanntmachung des Hinweises auf die Patenterteilung: **24.06.2015**
(21) Anmeldenummer: 12466017.6
(22) Anmeldetag: 08.08.2012
(51) Int. Cl.: F16H 55/36, F16D 13/18, F02B 67/06, F16D 23/12

(54) **Schaltbare Riemenscheibenanordnung**
Switchable pulley arrangement
Agencement de poulie débrayable

(30) Priorität: 09.08.2011 CZ 20110489
(43) Veröffentlichungstag der Anmeldung: 13.02.2013
(73) Patentinhaber: Skoda Auto A.S., 293 60 Mladá Boleslav (CZ)
(72) Erfinder: Uzlik, Vaclav, 14800 Praha 11 (CZ)

(56) Entgegenhaltungen:
- EP-A1- 2 273 144
- US-A- 2 611 464
- US-A- 2 931 476

## Beschreibung

### Technisches Gebiet

Die Erfindung betrifft eine schaltbare Riemenscheibenanordnung, insbesondere eine schaltbare Antriebsriemenscheibenanordnung der Wasserpumpe eines Verbrennungsmotors eines Kraftfahrzeuges.

### Bisheriger Stand der Technik

Derzeit umfasst die Antriebseinheit eines Kraftfahrzeuges ein Zylinderkurbelgehäuse, an dem der Zylinderkopf befestigt ist. Beide Bauteile weisen ein Kanalsystem auf, durch das die zur Ableitung der beim Lauf des Verbrennungsmotors entstehenden Wärme dienende Kühlflüssigkeit zwangsgetrieben wird. Der Zwangsumlauf der Kühlflüssigkeit wird durch die Wasserpumpe gesichert, welche über einen Riemen angetrieben wird. Nach einem Kaltstart des Motors besonders in der Winterzeit ist wünschenswert, dass die Motortemperatur schnellstmöglich den optimalen Wert erreicht, da insbesondere während der winterlichen Kaltstartvorgängen die Reibungskräfte erhöht sind, infolge dessen auch der Schadstoffinhalt in Abgasen und ebenfalls der Verbrauch sowie die Abnutzung usw. steigen. Damit bei diesem Betriebsmodus nicht zur unerwünschten Abkühlung kommt, ist zweckmäßig den Zwangsumlauf der Kühlflüssigkeit einzuschränken oder völlig abzustellen. Dies kann dadurch erzielt werden, dass zwischen der Antriebswelle, z.B. einer Nockenwelle, und der Riemenscheibe eine Hilfseinrichtung angeordnet wird, welche die Kopplung oder Entkopplung ermöglicht, sodass der Antriebsmoment abhängig von den Betriebsbedingungen des Motors übertragen wird. Die meisten Lösungen sind direkt in der Riemenscheibe der Wasserpumpe integriert, die über die Welle direkt mit dem Laufrad verbunden ist. Die eigentliche Leistungsübertragung wird meisten über eine axiale oder radiale Reibungskupplung realisiert.

Aus der US 2611464, die die Merkmale des Oberbegriffs von Anspruch 1 offenbart,

ist eine Kupplung zur Montage auf einer, Drehmoment übertragende Welle bekannt. Die Kupplung umfasst eine, zur Befestigung an der Welle angepasste Hülse, ein Paar von Kupplungselementen, die an der Hülse angeordnet sind und von denen eine relativ zu anderen bewegbar ist, wo die Hülse in Umfangsrichtung beabstandete Öffnungen hat. In jedem Öffnung ist ein freies mit dem beweglichen Kupplungselement zuschaltbares Element angeordnet. Die Kupplung umfasst weiter einen auf der Hülse und mit der Welle koaxial angeordneten Träger, in dem ein Stellglied und ein Steuer Element angeordnet sind. Das Stellglied weisst einen verjüngten Abschnitt auf. Durch Bewegung des Stellgliedes in axialer Richtung wirk der verjüngte Abschnitt auf das Element ein, das bewegt sich in radialer Richtung nach außen um die Kupplung der beweglichen Kupplungselemente zu veranlassen.

Aus der US 2931476 ist eine Kupplung bekannt, die eine Nockenvorrichtung aufweist. Diese Nockenvorrichtung besteht aus zwei kreisförmigen Platten. Jede Platte hat drei, über den Umfang beabstandeten Nuten mit geneigten Flächen. In jedem Paar von Nuten befindet sich eine Kugel. Die Drehung einer Platte bewirkt eine Nockenaction bzw. eine axiale Bewegung durch die Kugeln in Nuten.

Eine andere Vorrichtung ist z.B. der Patentschrift DE 102009056368 zu entnehmen. Der Nachteil liegt darin, dass durch die Erhöhung der axialen Reibungskraft zwecks der Übertragung der notwendigen Leistung eine Destruktion der Lagerung droht. Nachteilig ist auch der relativ erhebliche Arbeitsaufwand aus Sicht des Einbauraums.

### Darstellung der Erfindung

Die Aufgabe wird durch eine schaltbare Riemenscheibenanordnung gemäß dem Patentanspruch gelöst.

### Übersicht der Figuren der Zeichnungen

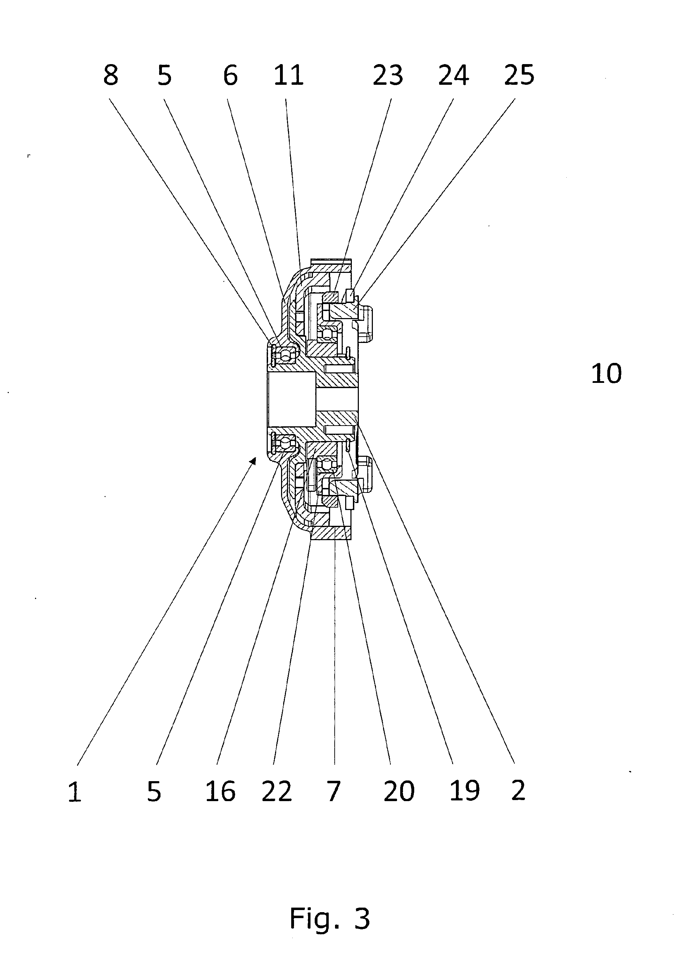

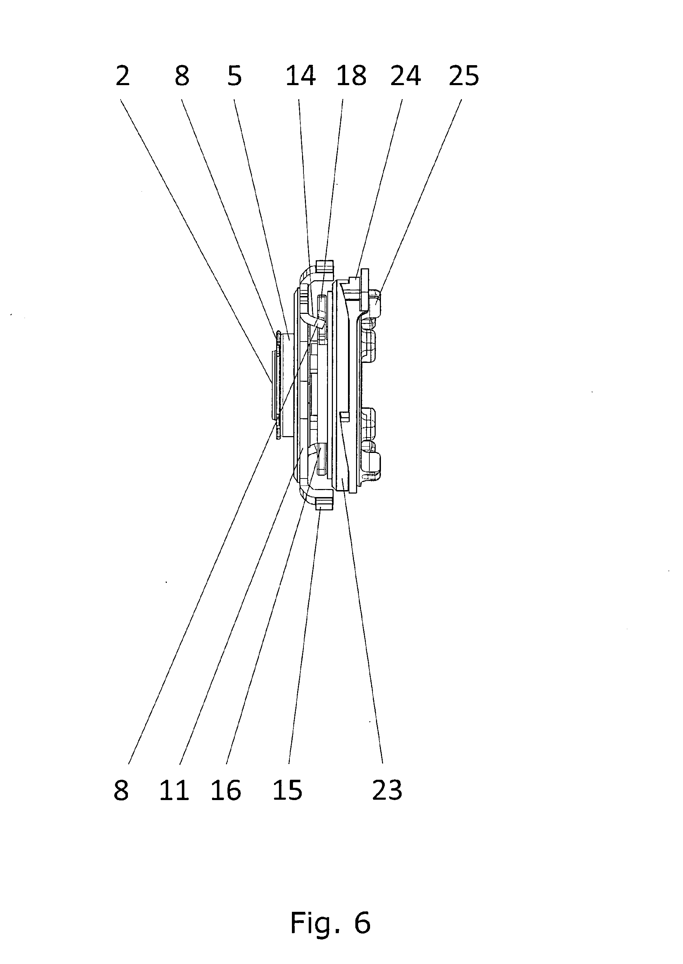

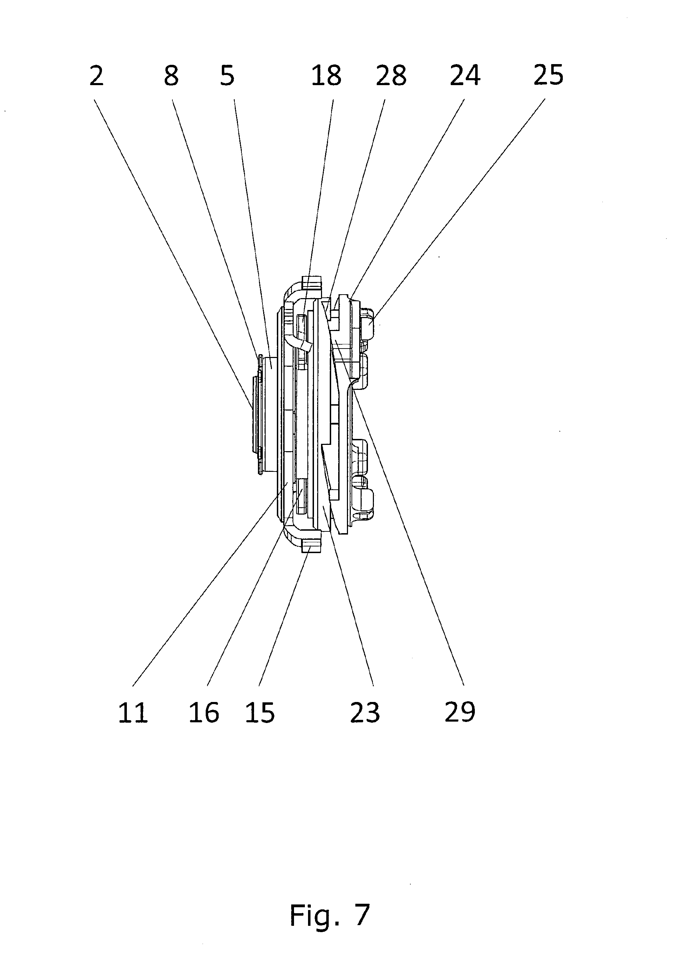

Die Erfindung wird näher anhand der Ausführungsbeispiele gemäß den beigefügten Zeichnungen erläutert, in denen die Fig. 1 eine perspektivische Ansicht der schaltbaren Riemenscheibenanordnung, Fig. 2 eine perspektivische Ansicht der schaltbaren Riemenscheibenanordnung im zerlegten Zustand, Fig. 3 einen Schnitt der schaltbaren Riemenscheibenanordnung, Fig. 4 eine perspektivische Ansicht der kombinierten Feder, Fig. 5 eine alternative Ausführung der kombinierten Feder in einer perspektivischen Ansicht, Fig. 6 eine partielle Vorderansicht der schaltbaren Riemenscheibenanordnung im geschalteten Zustand und Fig. 7 eine partielle Frontansicht der schaltbaren Riemenscheibenanordnung im gelösten Zustand darstellt.

### Ausführungsheispiel der Erfindung

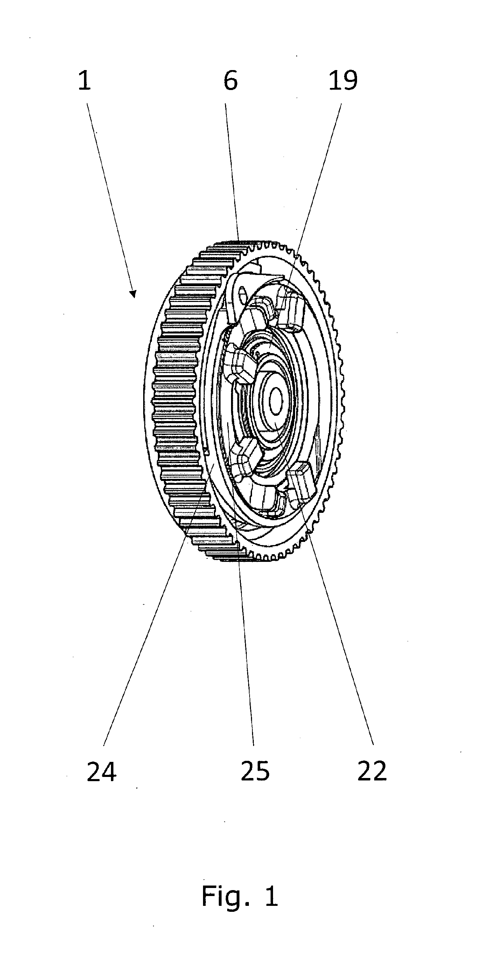

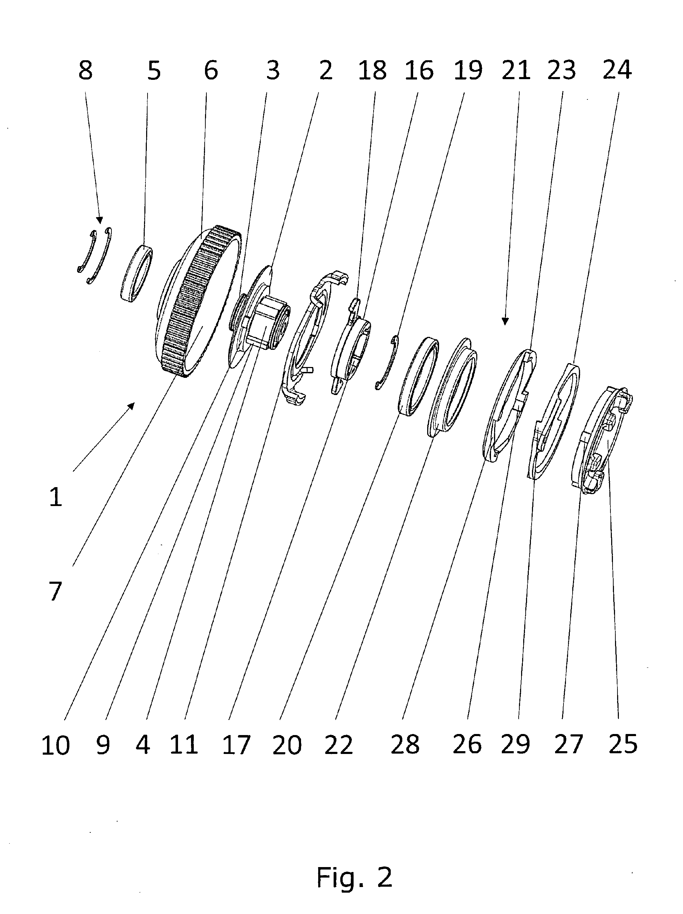

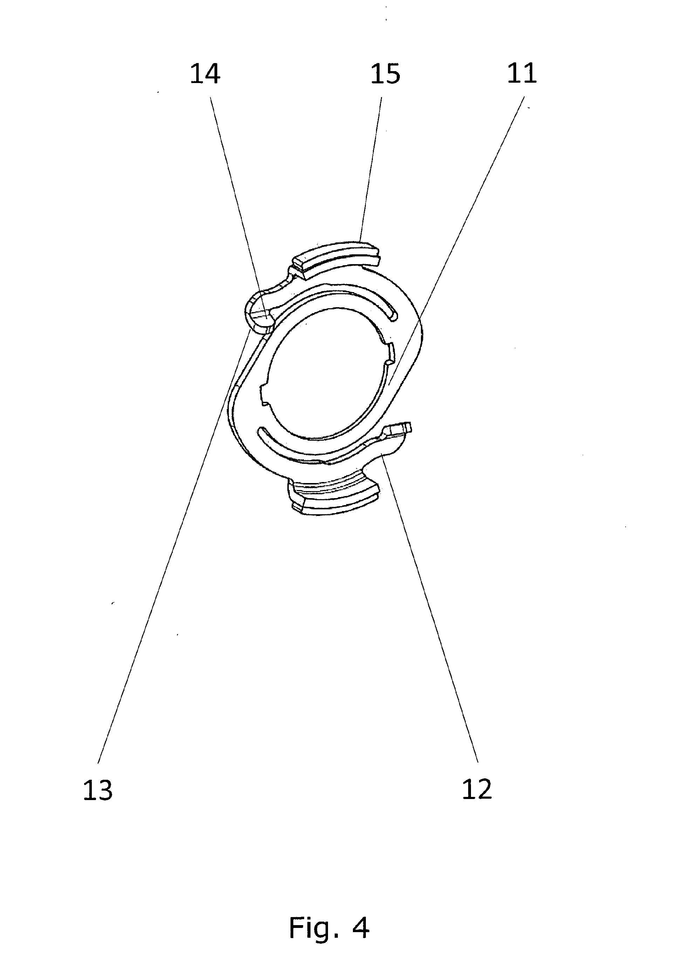

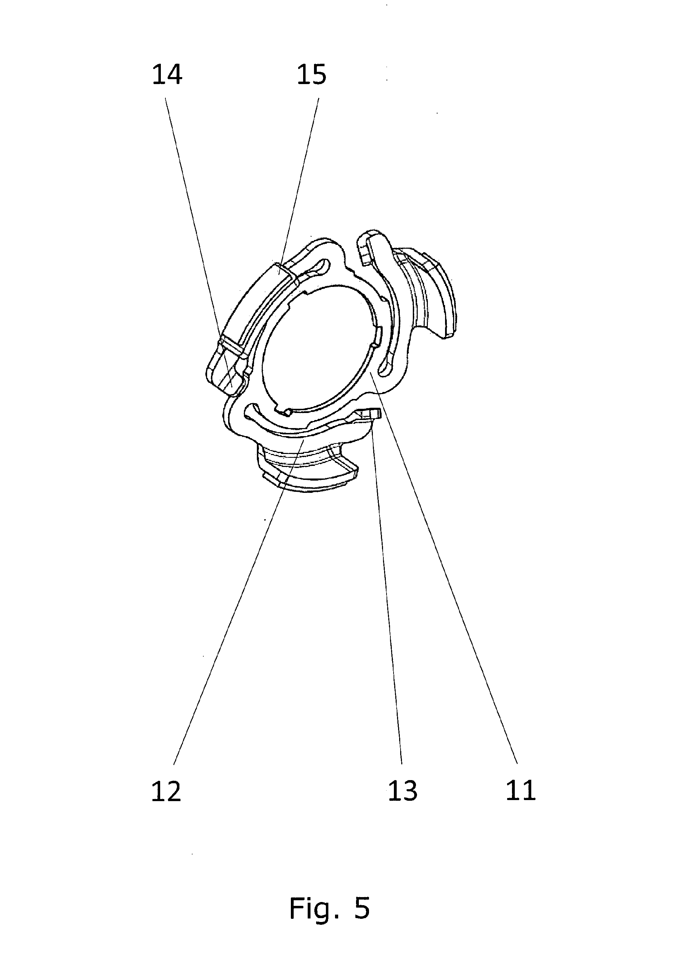

Die Fig. 1 und 2 stellen die Baugruppe einer schaltbaren Riemenscheibenanordnung 1 bestehend aus einem Mitnehmer 2, der eine vordere Nabe 3 und eine hintere Nabe 4 aufweist, wo an der vorderen Nabe 3 ein vorderes Lager 5 aufgesetzt ist, auf dem eine Riemenscheibe 6 mit einer Innenfläche 7 aufgepresst ist. Die Riemenscheibe 6 ist gegen die axiale Bewegung mit vorderen Sicherungsringen 8 gesichert. Die hintere Nabe 4 weist vier längliche Mitnehmerelemente 9 und ferner eine Einfassung 10 auf. An der Einfassung 10 ist fest eine kombinierte Feder 11 angeordnet. Die kombinierte Feder 11 weist gefederte Schenkel 12 auf, an deren Enden Vorsprünge 13 mit Schrägflächen 14 ausgebildet sind. Jeder gefederte Schenkel 12 weist ein Reibungselement 15 auf. In einer bevorzugten Ausführungsform nach der vorliegenden Erfindung (Fig. 4) weist die kombinierte Feder 11 zwei gefederte Schenkel 12 auf. Im Hinblick auf die zu übertragene Leistung kann die kombinierte Feder 11 größere Anzahl der gefederten Schenkel 12 und somit auch der Reibungselemente 15 aufweisen, wie der Fig. 5 zu entnehmen ist. Ferner ist auf der hinteren Nabe 4 ein Umschaltelement 16 aufgesetzt, das Innenlängsnuten 17 und weiter Umschaltschenkel 18 aufweist. An der hinteren Nabe 4 ist das Umschaltelement 16 mit einem hinteren Sicherungsring 19 gesichert. Auf dem Umschaltring 16 ist weiter ein hinteres Lager 20 aufgepresst, an dem ein Verstellmechanismus 21 angeordnet ist, der aus einem Kontaktring 22, einem Axialring 23, einem Drehring 24 und einem Befestigungsring 25 besteht. Auf dem Kontaktring 22, der auf dem hinteren Lager 20 aufgepresst ist, ist der Befestigungsring 25 aufgesetzt, an dem der Axialring 23 und der Drehring 24 angeordnet ist. Der Axialring 23 weist eine Aussparung 26 auf und ist mit dem Befestigungsring 25 verbunden, der Ausläufer 27 aufweist, während der Drehring 24 auf dem Befestigungsring 25 drehbar gelagert ist. Der Axialring 23 weist weiter wendelförmigen Aussparungen 28 auf und der Drehring 24 weist wendelförmige Ausläufer 29 auf, wobei die wendelförmigen Aussparungen 28 und Ausläufer 29 aneinander anliegen und sich bewegen können.

Die schaltbare Riemenscheibenanordnung 1 ist auf der Nockenwelle aufgesetzt und mit Hilfe eines Zahnriemens die erforderliche Leistung auf die Wasserpumpe überträgt (nicht dargestellt). Die Drehbewegung wird auf den Mitnehmer 2 übertragen und im geschalteten Zustand erfolgt die Übertragung der erforderlichen Leistung mittels der Reibungsverbindung zwischen den Reibungselementen 15 der kombinierten Feder 11 und der Innenflächen 7 der Riemenscheibe 6. Die kombinierte Feder 11, bzw. deren gefederten Schenkel 12, bringen die notwendige Kraft auf die Reibungselemente 15 auf. Zum Lösen der Reibungskraft zwischen den Reibungselementen 15 der kombinierten Feder 11 und der Innenfläche 7 der Riemenscheibe 6 muss zwischen diesen ein Spielraum gebildet werden. Dies wird dadurch erzielt, dass durch die Verschwenkung des Drehrings 24 gegenüber dem Axialring 23 die wendelförmigen Flächen der Aussparungen 28 und der Vorsprünge 29 sich gegenseitig verschieben, infolgedessen sich der Axialring 23 axial verschiebt und diese Bewegung über den Kontaktring 22 auf das Schaltelement 16 übertragen wird. Bei seiner Verschiebung in der Axialrichtung werden die Umschaltschenkel 18 auf die Schrägflächen 14 der gefederten Schenkel 12 der kombinierten Feder 11 aufgeschoben, wodurch diese zusammengedrückt werden. Infolge dieses Zusammendrückens verlieren die Reibungselemente 15 den Kontakt mit der Innenfläche 7 der Riemenscheibe 6 und die Übertragung der Leistung auf die Wasserpumpe (nicht dargestellt) wird abgestellt. Die Vorrichtung für die Verschwenkung des Drehrings 24 und somit zur Betätigung dieser Baugruppe ist nicht dargestellt, dennoch können die geläufigen und eingesetzten Alternativen wie z.B. linearer Elektromagnet, Schrittmotor oder Servomotor genutzt werden. Weitere Variante kann einer auf dem Prinzip des Unter- oder Überdrucks arbeitende Aktuator darstellen.

Durch die Nutzung der kombinierten Feder 11 wird die Größe der Riemenscheibe 6 sowie die Anzahl der Baugruppenteile reduziert, wodurch auch die Material- und Finanzkosten reduziert werden. Die Parameter der Feder können erfolgreich durch die Änderung derer Geometrie angepasst werden.

### Bezugszeichenliste

- 1.: Schaltbare Riemenscheibenanordnung
- 2.: Mitnehmer
- 3.: vordere Nabe
- 4.: hintere Nabe
- 5.: vorderes Lager
- 6.: Riemenscheibe
- 7.: Innenfläche
- 8.: vorderer Sicherungsring
- 9.: längliches Mitnehmerelement
- 10.: Einfassung
- 11.: kombinierte Feder
- 12.: gefederter Schenkel
- 13.: Vorsprung
- 14.: Schrägfläche
- 15.: Reibungselement
- 16.: Schaltelement
- 17.: innere Längsnut
- 18.: Umschaltschenkel
- 19.: hinterer Sicherungsring
- 20.: hinteres Lager
- 21.: Verstellmechanismus
- 22.: Kontaktring
- 23.: Axialring
- 24.: Drehring
- 25.: Befestigungsring
- 26.: Aussparung
- 27.: Ausläufer
- 28.: wendelförmige Aussparung
- 29.: wendelförmiger Ausläufer

## Patentansprüche

1. Schaltbare Riemenscheibenanordnung, enthaltend einen Mitnehmer (2), der eine vordere Nabe (3), an der drehbar eine Riemenscheibe (6) angeordnet ist, und
ferner eine hintere Nabe (4) aufweist, an der eine kombinierte Feder (11), ein Schaltelement (16) und ein Verstellmechanismus (21) angeordnet sind, wobei die kombinierte Feder (11),
die wenigstens einen federten Schenkel (12) aufweist, mit dem Mitnehmer (2) fest verbunden ist, während das Schaltelement (16) an der hinteren Nabe (4) des Mitnehmers (2) verschiebbar angeordnet ist, wobei auf dem Schaltelement (16) der Verstellmechanismus (21) angeordnet ist, und wobei das Schaltelement (16) und der Verstellmechanismus (21) gegeneinander drehbar angeordnet sind,
**dadurch gekennzeichnet, dass** der Verstellmechanismus (21) aus einem Kontaktring (22), auf dem ein Befestigungsring (25) angeordnet ist, wobei an dem Befestigungsring (25) drehbar ein Drehring (24) angeordnet ist,
und ferner aus einem Axialring (23), der am Befestigungsring (25) verschiebbar angeordnet ist, besteht.

## Claims

1. Switchable pulley wheel arrangement, comprising a driver (2) which has a front hub (3), on which a pulley wheel (6) is arranged rotatably, and, furthermore, a rear hub (4), on which a combined spring (11), a switching element (16) and an adjusting mechanism (21) are arranged, the combined spring (11) which has at least one resilient limb (12) being connected fixedly to the driver (2), whereas the switching element (16) is arranged displaceably on the rear hub (4) of the driver (2), the adjusting mechanism (21) being arranged on the switching element (16), and the switching element (16) and the adjusting mechanism (21) being arranged rotatably with respect to one another, **characterized in that** the adjusting mechanism (21) consists of a contact ring (22), on which a fastening ring (25) is arranged, a rotating ring (24) being arranged rotatably on the fastening ring (25), and, furthermore, of an axial ring (23) which is arranged displaceably on the fastening ring (25).

## Revendications

1. Agencement de poulie débrayable comprenant un dispositif d'entraînement (2) qui présente un moyeu avant (3) sur lequel est disposée à rotation une poulie (6), et en outre un moyeu arrière (4) sur lequel sont disposés un ressort combiné (11), un élément de débrayage (16) et un mécanisme de réglage (21), le ressort combiné (11), qui présente au moins une branche à ressort (12), étant connecté fixement au dispositif d'entraînement (2) tandis que l'élément de débrayage (16) est disposé de manière déplaçable sur le moyeu arrière (4) du dispositif d'entraînement (2), le mécanisme de réglage (21) étant disposé sur l'élément de débrayage (16) et l'élément de débrayage (16) et le mécanisme de réglage (21) étant disposés de manière à pouvoir tourner l'un par rapport à l'autre, **caractérisé en ce que** le mécanisme de réglage (21) est constitué d'une bague de contact (22) sur laquelle est disposée une bague de fixation (25), une bague rotative (24) étant disposée à rotation sur la bague de fixation (25), et en outre d'une bague axiale (23) qui est disposée de manière déplaçable sur la bague de fixation (25).
